# EUROPEAN PATENT APPLICATION

(11) **EP 4 317 589 A1**
(43) Date of publication of application: **07.02.2024**
(21) Application number: 22780601.5
(22) Date of filing: 25.03.2022
(51) Int. Cl.: E01D 22/00, G01B 11/16, E04G 23/02, G01N 21/88

(54) **METHOD FOR INSPECTING SURFACE DEFORMATION OF STRUCTURE, SYSTEM FOR INSPECTING SURFACE DEFORMATION OF STRUCTURE, AND STRUCTURE PROTECTION SHEET**

(30) Priority: 31.03.2021 JP 2021060637; 31.03.2021 JP 2021060638; 24.03.2022 JP 2022048919
(71) Applicant: Keiwa Incorporated, Tokyo 103-0025 (JP)
(72) Inventor: TANI, Satoru, Tokyo 103-0025 (JP); TSUJI, Takahiro, Tokyo 103-0025 (JP); MATSUNO, Yuki, Tokyo 103-0025 (JP); YASUNO, Kosuke, Tokyo 103-0025 (JP); SHIBA, Satoshi, Tokyo 103-0025 (JP); KARIYA, Yu, Tokyo 103-0025 (JP)
(74) Representative: Mewburn Ellis LLP
(86) International application number: PCT/JP2022/014535
(87) International publication number: WO 2022/210388

(57) **Abstract**

Provided is a method for inspecting surface deformation of a structure which enables easy measurement of the amount of deformation of the surface of a structure protection sheet attached to the surface of a structure such as concrete. The method for inspecting surface deformation of a structure includes: identifying a structure protection sheet attached to a surface of a structure using an individual identification means; digitally photographing a surface of a resin layer on an outermost surface of the structure protection sheet using a digital photography means; measuring a dimension of the surface of the resin layer based on image data obtained in the digital photography using a dimension measuring means; and calculating an amount of deformation of the surface of the resin layer based on data of the measured dimension using a calculation means.

## Description

### TECHNICAL FIELD

The present invention relates to a method for inspecting surface deformation of a structure, a system for inspecting surface deformation of a structure, and a structure protection sheet. More specifically, the present invention relates to a method for inspecting surface deformation of a structure which enables easy measurement of the amount of deformation of the surface of a structure protection sheet attached to the surface of a structure for surface protection, a system for inspecting surface deformation of a structure which is usable in the method for inspecting surface deformation of a structure, and a structure protection sheet which is to be attached to the surface of a structure such as concrete for surface protection and for easy detection of the deformation of the structure.

### BACKGROUND ART

In the maintenance and management of concrete structures such as tunnels and bridge piers on railways and roads, the structures need to be inspected for damage, destruction, deterioration, etc. of concrete. A conventionally known method for the inspection is a hammering method called the Schmidt hammer method.

In the hammering method, an inspector hits the surface of a structure with a hammer, aurally distinguishes the hammering sound, and empirically determines the presence or absence of the damage of concrete.

However, such a conventional hammering method greatly depends on the skill level of the inspector in the field, and individual differences among inspectors are reflected in the test results. In addition, the hammering method does not allow quantitative determination of the state of the structure, which makes it difficult to efficiently inspect the structure over a wide area.

Patent Literature 1, for example, suggests a hammer device for inspection that is easy to carry and allows understanding of the surface state of a concrete structure.

However, with the hammer device for inspection disclosed in Patent Literature 1, the inspector can only understand the state of the hit portion of the inspection object and cannot efficiently inspect the surface of large structures such as tunnels and bridge piers on railways and roads.

Concrete structures undergo repair work and reinforcement work as they age. Patent Literature 2, for example, suggests a sheet to be attached to the surface of a concrete structure for surely and easily preventing the degradation of concrete at a low cost in a shorter construction period.

As a repair method in which surface deformation of a concrete structure can be visually confirmed, for example, Patent Literature 3 suggests a repair method using sodium silicate and Patent Literature 4 suggests a method using a transparent epoxy resin.

### CITATION LIST

### - Patent Literature

Patent Literature 1: JP 2020-098098 A
Patent Literature 2: JP 2010-144360 A
Patent Literature 3: JP 3207825 U
Patent Literature 4: JP 2016-190365 A

### SUMMARY OF INVENTION

### - Technical Problem

Though the method of attaching a protection sheet to the surface of a concrete structure is considered to be a very effective method for protecting a structure, covering the surface of a concrete structure with a sheet in the repair work or reinforcement work disadvantageously disables inspection of the structure by a conventional hammering method using a hammer.

In addition, the method using sodium silicate or a transparent epoxy resin takes several days to complete, increasing the cost.

The present invention has been made to solve the above problems, and aims to provide a method for inspecting surface deformation of a structure which enables easy measurement of the amount of deformation of the surface a structure protection sheet attached to the surface of a structure, a system for inspecting surface deformation of a structure which is usable in the method for inspecting surface deformation of a structure, and a structure protection sheet which is to be attached to the surface of a structure such as concrete for surface protection and for easy observation of a surface change that follows the deterioration or damage of the structure.

### - Solution to Problem

The present inventors made studies on a method for observing changes in the surface state of a structure such as concrete even with a structure protection sheet attached to the surface of the structure, and focused on the fact that, when the surface of a structure is deformed, the surface of the structure protection sheet attached to the surface of the structure is also deformed. The present inventors found out that whether the surface of a structure is deformed can be easily determined by digitally photographing the amount of deformation of the outermost surface of the structure protection sheet attached to the structure and calculating the amount of deformation. Thus, the present invention was completed. This technical idea is applicable as structure protection sheets for non-concrete structures.

(1) A method for inspecting surface deformation of a structure of the present invention includes: identifying a structure protection sheet attached to a surface of a structure using an individual identification means; digitally photographing a surface of a resin layer on an outermost surface of the structure protection sheet using a digital photography means; measuring a dimension of the surface of the resin layer based on image data obtained in the digital photography using a dimension measuring means; and calculating an amount of deformation of the surface of the resin layer based on data of the measured dimension using a calculation means.

According to the invention, the individual identification means enables identification of a structure protection sheet attached to a structure to be inspected; the digital photography means enables digital photography of the surface of the identified structure protection sheet; the dimension measuring means enables measurement of a dimension of the surface of the resin layer based on image data obtained in the digital photography; and the calculation means enables calculation of the amount of deformation of the surface of the resin layer based on data of the measured dimension. Thus, surface deformation of a structure can be easily detected.

In the method for inspecting surface deformation of a structure of the present invention, preferably, the digital photography means digitally photographs the surface of the resin layer using an optical means.

According to the invention, detailed image data of the surface of the resin layer can be obtained using the digital photography means, which allows more quick and accurate inspection of the deformation of the surface of the structure.

Preferably, the optical means uses light in at least one region selected from the group consisting of a visible light region, an infrared light region, and an ultraviolet light region.

According to the invention, detailed image data of the surface of the resin layer can be obtained using the digital photography means, which allows more quick and accurate inspection of the deformation of the surface of the structure.

In the method for protecting a surface of a structure of the present invention, preferably, a pattern for detecting deformation is formed on the surface of the resin layer, and the pattern for detecting deformation is photographed using the digital photography means.

According to the invention, the pattern for detecting deformation enables easy and quick detection of the deformation of the surface of the structure protection sheet that follows the deformation of the surface of the structure.

In the method for inspecting surface deformation of a structure of the present invention, preferably, the pattern for detecting deformation is a geometric pattern.

According to the invention, it becomes easier to detect the deformation of the surface of the structure protection sheet that follows the deformation of the structure.

In the method for inspecting surface deformation of a structure of the present invention, preferably, the geometric pattern is composed of a straight line and a dot.

According to the invention, it becomes easier to detect the deformation of the surface of the structure protection sheet that follows the deformation of the structure.

In the method for inspecting surface deformation of a structure of the present invention, preferably, the pattern for detecting deformation is formed using a retroreflective coating material.

According to the invention, the pattern for detecting deformation is not normally observed on the surface of the structure and it can be observed only upon inspection of the structure. Therefore, when a vehicle such as an automobile, or the like passes by the structure, the pattern for detecting deformation does not bother the driver by coming into his/her sight and is less likely to induce an accident or the like.

In the method for inspecting surface deformation of a structure of the present invention, preferably, the digital photography means is fixed to a moving object or a rod-shaped fixture.

According to the invention, the inspection can be easily conducted even when the structure to be inspected is located at a high place, above water, under water, in a remote place, or in a hazardous area, which is not easily accessible to the operator.

Preferably, the moving object is a small unmanned aircraft, an unmanned aircraft, an aircraft, an artificial satellite, an unmanned ship, a ship, an underwater moving object, an unmanned automobile, or an automobile.

According to the invention, the inspection can be easily conducted even when the structure to be inspected is located at a high place, above water, under water, in a remote place, or in a hazardous area, which is not easily accessible to the operator.

(2) A system for inspecting surface deformation of a structure of the present invention includes: an individual identification means for identifying a structure protection sheet attached to a surface of a structure; a digital photography means for digitally photographing a surface of a resin layer on an outermost surface of the structure protection sheet; a dimension measuring means for measuring a dimension of the surface of the resin layer based on image data obtained in the digital photography, and a calculation means for calculating an amount of deformation of the surface of the resin layer based on data of the measured dimension.

According to the invention, a structure protection sheet attached to the surface of a structure is identified, and the amount of deformation of the surface of the resin layer deformed following the deformation of the surface of the structure, which appears on the surface of the identified structure protection sheet, can be calculated using the dimension measuring means and the calculation means based on the image data of the surface of the resin layer photographed using the digital photography means. The presence or absence of deformation of the surface of the structure can be therefore easily determined.

The system enables efficient inspection of even a large-sized structure.

(3) A structure protection sheet of the present invention is to be attached to a surface of a structure, the structure protection sheet includes a resin layer on an outermost surface in a state of being attached to the structure, and a pattern for detecting deformation is formed on a surface of the resin layer.

According to the invention, when deformation that follows the deformation of a structure appears on the surface of the structure protection sheet in a state of being attached to the structure, the pattern for detecting deformation is deformed, which enables easier detection of the deformation of the structure by observation.

Preferably, the structure protection sheet of the present invention includes a polymer cement cured layer on a side to be closer to the structure, and the resin layer is provided on the polymer cement cured layer.

The polymer cement cured layer is excellent in adhesion and the like to a structure and can impart excellent properties such as waterproofness, resistance to salt permeation, and inhibition of neutralization to the resin layer on the polymer cement cured layer.

Furthermore, the structure protection sheet can be mass-produced in a production line including coating and drying in a factory, thereby achieving low cost, dramatic reduction in the work period at a construction site, and long-term protection of structures.

In the structure protection sheet of the present invention, the polymer cement cured layer may be a layer containing a cement component and a resin, and the resin may be contained in an amount of 10% by weight or more and 40% by weight or less. The resin is more preferably contained in an amount of 20% by weight or more and 30% by weight or less.

According to the present invention, the polymer cement cured layer is a layer having excellent conformity and high compatibility, which improves the adhesion of the layer itself. The cement component in the polymer cement cured layer on a side to be closer to a structure increases the adhesion to a structure such as concrete.

The structure protection sheet of the present invention preferably further includes a mesh layer.

According to the invention, the presence of a mesh layer can impart excellent properties such as strength to the structure protection sheet of the present invention.

In the structure protection sheet of the present invention, preferably, the pattern for detecting deformation is a geometric pattern.

According to the invention, it becomes easy to detect the deformation that follows the deformation of the structure, which appears on the surface of the structure protection sheet.

In the structure protection sheet of the present invention, preferably, the geometric pattern is composed of a straight line and a dot.

According to the invention, it becomes easier to detect the deformation that follows the deformation of the structure, which appears on the surface of the structure protection sheet.

In the structure protection sheet of the present invention, preferably, the pattern for detecting deformation is formed using a retroreflective coating material.

According to the invention, the pattern for detecting deformation is not normally observed on the surface of the structure and it can be observed only upon inspection of the structure. Therefore, when a vehicle such as an automobile, or the like passes by the structure, the pattern for detecting deformation does not bother the driver by coming into his/her sight and is less likely to induce an accident or the like.

### - Advantageous Effects of Invention

The present invention can provide a method for detecting deformation of a structure which enables easy detection of the deformation of the surface of a structure such as concrete, a system for inspecting a structure which can be used in the method, and a structure protection sheet that can protect a structure such as concrete and enables easy detection of the deformation of the structure when it occurs. In particular, since deformation of the structure protection sheet that occurs following the deformation of the surface of the structure is easily detected, even a large structure can be quickly and easily inspected and even an unskilled worker can inspect the state of the structure accurately.

### BRIEF DESCRIPTION OF THE DRAWINGS

FIG. 1 illustrates cross-sectional structural views each showing one example of the structure protection sheet used in the present invention.
FIG. 2 illustrates a schematic view showing one example of the pattern for detecting deformation of the structure protection sheet used in the present invention.
FIG. 3 illustrates explanatory views showing a construction method using the structure protection sheet.
FIG. 4 illustrates explanatory views showing an example in which the structure protection sheet is used in the cast-in-place method.
FIG. 5 shows photographs each showing a state of deformation of the structure protection sheet.
FIG. 6 illustrates cross-sectional structural views each showing another example of the structure protection sheet used in the present invention.
FIG. 7 illustrates schematic views showing one example of the mesh layer of the structure protection sheet used in the present invention.
FIG. 8 illustrates a schematic view showing a method for inspecting surface deformation of a structure of the present invention.

### DESCRIPTION OF EMBODIMENTS

Hereinbelow, a method for inspecting surface deformation of a structure of the present invention and a structure protection sheet used in the inspection method are described with reference to the drawings. The present invention may be variously modified, provided that the technical feature is maintained, and is not limited to the following embodiments and drawings.

### [Method for inspecting surface deformation of structure]

The method for inspecting surface deformation of a structure of the present invention includes a step of identifying a structure protection sheet attached to the surface of a structure using an individual identification means.

This step allows identification of the structure protection sheet to be inspected.

The individual identification means may be any means that can identify the structure protection sheet. Examples thereof include a combination of individual identification information attached to the structure protection sheet and a reader for reading the individual identification information.

Examples of the individual identification information include 2D barcodes such as QR (Quick Response) codes, barcodes, and arbitrary character strings.

Examples of the reader include a digital camera and an optical sensor.

Examples of the individual identification means may also include a means using an RF-ID chip, a means using position information by GPS, and a means for converting numbers written on the target structure protection sheet into data by OCR.

The method for inspecting surface deformation of a structure of the present invention includes a step of digitally photographing a surface of a resin layer on the outermost surface of the structure protection sheet using a digital photography means.

Through this step, image data of the surface of the resin layer in the structure protection sheet can be obtained.

In the present invention, the surface of the resin layer before the structure protection sheet is deformed may be photographed in advance using the digital photography means. This allows comparison between the image data of the surface of the resin layer before and after the structure protection sheet is deformed, and the presence or absence of deformation and the degree of deformation can be more suitably evaluated.

In the present invention, a pattern for detecting deformation may be formed on the surface of the resin layer to be photographed using the digital photography means. The pattern for detecting deformation is preferably a geometric pattern.

The digital photography means is not limited, and may suitably be, for example, a digital camera or a mobile phone terminal with a camera function, in particular, a multi-function phone terminal such as a smartphone or a tablet terminal.

In the method for inspecting surface deformation of a structure of the present invention, preferably, the digital photography means digitally photographs the surface of the resin layer using an optical means.

Preferably, the optical means uses light in at least one region selected from the group consisting of a visible light region, an infrared light region, and an ultraviolet light region.

Digital photography using the optical means provides more detailed image data that enables more quick and accurate inspection about the presence or absence of deformation of the surface of the structure.

In the present invention, preferably, the digital photography means is fixed to a moving object or a rod-shaped fixture. The inspection of the surface of a structure can be conducted safely, quickly, and accurately even in locations where conventional inspections have been challenging, such as the surface of a higher part of a large structure, a structure in a remote place, a structure above or under water, and a structure in a hazardous area, for example.

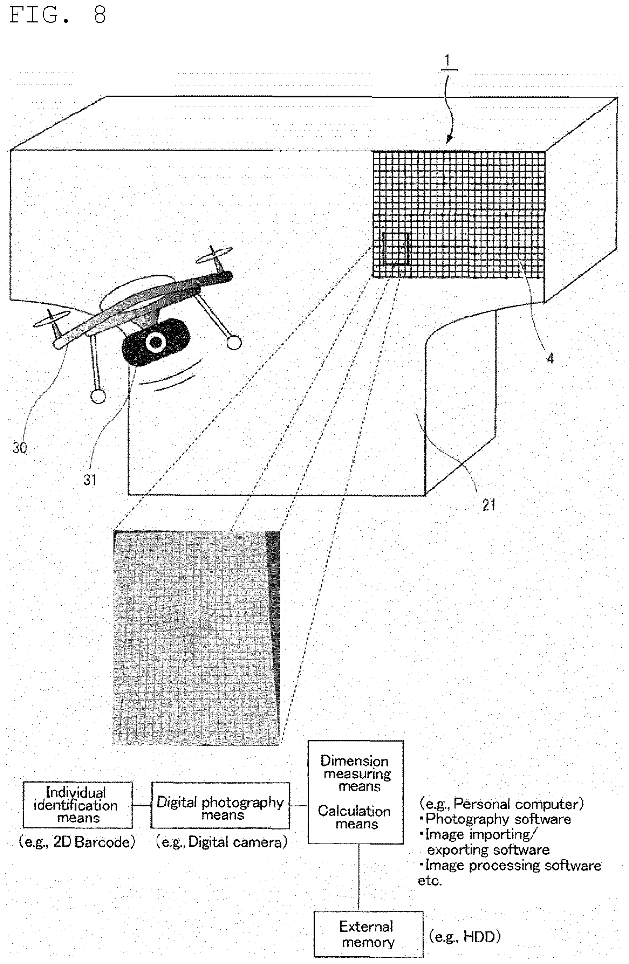

As shown in FIG. 8, for example, a structure protection sheet 1 to be inspected that is attached to a higher part of a large structure 21 is identified using an individual identification means, and a pattern 4 on the surface of the structure protection sheet 1 is easily photographed using a digital photography means 31 fixed to a moving object 30 (flying drone in FIG. 8) even when the structure protection sheet 1 is present at a high place which is not easily accessible. In this manner, the surface state of the structure can be inspected safely, quickly, and accurately.

In the present invention, the image data obtained using the digital photography means is processed using a device such as a personal computer with a predetermined software (dimension measuring means and calculation means), and the surface state of the structure protection sheet is inspected.

The moving object may be, for example, a small unmanned aircraft, an unmanned aircraft, an aircraft, an artificial satellite, an unmanned ship, a ship, an underwater moving object, an unmanned automobile, or an automobile.

Examples of the small unmanned aircraft and unmanned aircraft include flying drones, radio-controlled aircraft, and radio-controlled helicopters.

Examples of the unmanned ship include radio-controlled ships, and examples of the underwater moving object include radio-controlled submarines.

Examples of the unmanned automobile include radio-controlled cars.

The rod-shaped fixture may be, for example, a rod-shaped fixture with a fixed length. Preferably, the rod-shaped fixture is a telescopic rod-shaped fixture whose length can be changed to match the size of the structure to be inspected.

The method for inspecting surface deformation of a structure of the present invention includes a step of measuring a dimension of the surface of the resin layer based on image data obtained in the digital photography using a dimension measuring means.

Through this step, the dimension of the surface of the resin layer in the structure protection sheet photographed using the digital photography means can be measured, and data of the measured dimension is used as data for calculating the amount of deformation of the surface of the resin layer.

The dimension measuring means is not limited, and may be, for example, a known device such as a personal computer with image analysis software.

The method for inspecting surface deformation of a structure of the present invention includes a step of calculating the amount of deformation of the surface of the resin layer based on the data of the measured dimension using a calculation means.

Through this step, the amount of deformation of the surface of the structure protection sheet can be specifically calculated, and the deformation state of the surface of the structure can be evaluated.

The calculation means is not limited, and may be, for example, a known device such as a personal computer, tablet computer, smart phone, or electronic notebook with software such as calculation software.

In the present invention, the process from the step in which the digital photography means is used to the step in which the calculation means is used may be carried out by, for example, a digital image correlation (DIC) method. The digital image correlation method is a known method for measuring the amount of deformation by analyzing image data before and after deformation of the surface of the resin layer. It may be carried out, for example, as follows. A random pattern is formed on the surface of a resin layer to be inspected using a spray or the like, the random pattern is digitally photographed using a digital photography means, the obtained image data of the random pattern is automatically recognized, and a three-dimensional mesh is generated. Then, the distortion and displacement are calculated from the deformation of the surface, followed by mapping. Thus, deformation of the surface of the resin layer that follows the deformation of the structure can be detected.

Further, when the pattern for detecting deformation is formed on the surface of the resin layer, the pattern for detecting deformation is digitally photographed using the digital photography means, and the obtained image data is used to calculate the amount of deformation of the pattern for detecting deformation using the dimension measuring means and the calculation means. Thus, the deformation of the surface of the resin layer that follows the deformation of the structure can be detected.

In the method for inspecting surface deformation of a structure of the present invention, the amount of deformation of the surface of the resin layer is obtained as image data and calculated from the image data. Therefore, the presence or absence of deformation of the surface of a structure can be inspected reliably and easily.

### [Structure protection sheet]

The structure protection sheet of the present invention is to be attached to the surface of a structure and is not limited as long as it can be identified by the individual identification means described above in a state of being attached to the structure. For example, it may have a configuration where a resin layer is on the outermost surface in the state of being attached to a structure and a pattern for detecting deformation is formed on the surface of the resin layer. The present invention also encompasses a structure protection sheet having such a configuration.

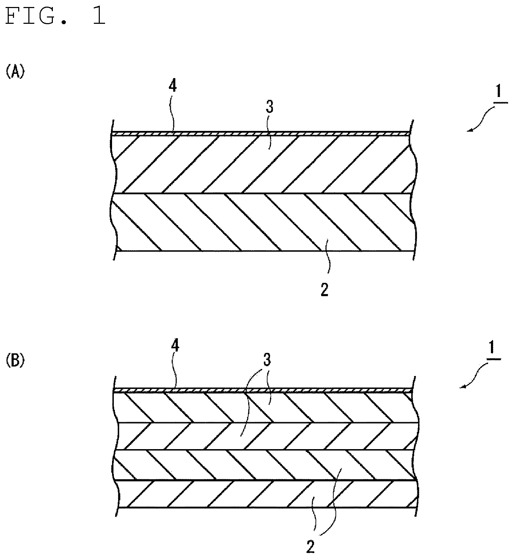

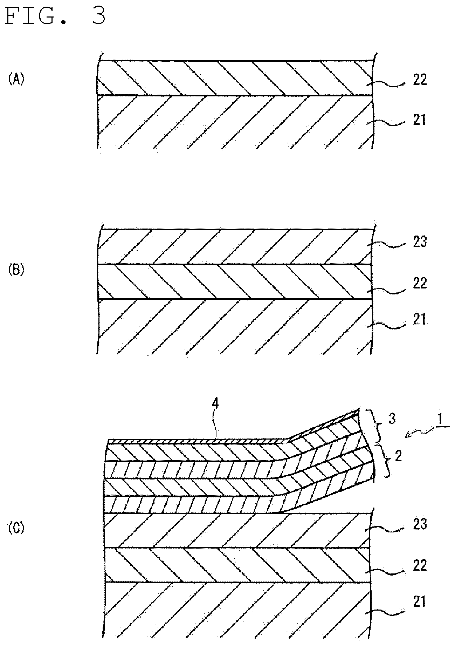

The structure protection sheet of the present invention is preferably, as illustrated in FIG. 1 or FIG. 3(C), a structure protection sheet 1 including a polymer cement cured layer 2 on the side to be closer to a structure 21, a resin layer 3 on the polymer cement cured layer 2, and a pattern 4 for detecting deformation formed on the resin layer 3. The polymer cement cured layer 2 and the resin layer 3 may each consist of a single layer or a stack of layers. Depending on the required performance, another layer may be provided between the polymer cement cured layer 2 and the resin layer 3.

The structure protection sheet 1 of the present invention preferably has a thickness distribution of not more than ± 100 um. The structure protection sheet 1 has a thickness distribution within the above range, allowing even an unskilled worker to stably place a layer with no or small thickness variation on a surface of the structure 21. Controlling the thickness distribution within the above range facilitates uniform reinforcement of a structure, and a deformation appearing on the surface of the pattern 4 that follows the deformation of the surface of the structure 21 can be accurately detected.

The polymer cement cured layer 2 on the side to be closer to the structure 21 is excellent in adhesion and the like to the structure 21. The resin layer 3 on the polymer cement cured layer 2 can easily impart excellent properties such as waterproofness, resistance to salt permeation, and inhibition of neutralization.

The structure protection sheet 1 can be mass-produced in a production line including coating and drying in a factory, thereby achieving low cost, dramatic reduction in the work period at a construction site, and long-term protection of structures. Therefore, the structure protection sheet 1 can not only dramatically reduce a construction period to be attached to a surface of the structure 21 but also protect the structure 21 for a long time.

Furthermore, since the pattern 4 for detecting deformation is formed on the surface of the resin layer 4 of the structure protection sheet 1, when the surface of the structure 21 is deformed, the pattern 4 is also deformed accordingly, so that the deformation of the structure can be easily detected.

Appropriate selection of the pattern 4 can impart a suitable design property to the appearance of the structure 21.

Specific examples of each structural element are described below.

### (Structure)

The structure 21 is a mating member to which the structure protection sheet 1 of the present invention is attached.

Examples of the structure 21 include structures made of concrete.

Concrete is generally obtained by casting and curing a cement composition at least containing a cement-based inorganic substance, an aggregate, an admixture, and water. Such concrete is widely used as civil engineering structures such as road bridges, tunnels, sluice gates and other river management facilities, sewer pipes, and harbor quays. In the present invention, the structure protection sheet 1 is applied to the structure 21 made of concrete, thereby achieving marked advantages such as conformity to cracks or swelling of the concrete, prevention of entry of water or degradation factors such as chloride ions into the concrete, and emission of moisture in the concrete as water vapor.

### (Resin layer)

As illustrated in FIG. 3(C), the resin layer 3 is a layer to be placed on the side further from the structure 21 in the sheet and to appear on the surface side of the structure 21. For example, the resin layer 3 may be a single layer as illustrated in Fig. 1(A) or a stack of layers including at least two layers as illustrated in Fig. 1(B). Whether the layer should be a single layer or a stack of layers may be optionally determined in consideration of the thickness of the entire sheet, functions to impart (waterproofness, resistance to salt permeation, inhibition of neutralization, water vapor transmittance, etc.), the length of the production line in the factory, production cost, etc. For example, when the production line is too short to form a single layer having a prescribed thickness, the layer may be formed by repeating coating twice or more. In the repeat coating, a second layer is applied after the first layer is dried. Thereafter, the second layer is dried.

The resin layer 3 is flexible and can conform to cracks or fissures of concrete. The resin layer 3 is obtainable by applying a coating material that can form a resin layer excellent in waterproofness, resistance to salt permeation, inhibition of neutralization, and water vapor transmittance. The resin constituting the resin layer 3 may be, for example, an acrylic resin having characteristics of rubber (for example, synthetic rubber containing an acrylic acid ester as a main component), acrylic urethane resin, acrylic silicone resin, fluororesin, flexible epoxy resin, or polybutadiene rubber. One resin material may be used alone or multiple resin materials may be used in combination. The resin material is preferably the same as the later-described resin component constituting the polymer cement layer 2. Preferably, it is a resin containing a component capable of forming an elastic film such as rubber.

In particular, the acrylic resin having the characteristics of rubber preferably includes an aqueous emulsion of an acrylic rubber copolymer because it is excellent in safety and coatability. The acrylic rubber copolymer content of the emulsion is, for example, 30 to 70% by mass. For example, the acrylic rubber copolymer emulsion is obtainable by emulsion polymerization of a monomer in the presence of a surfactant. The surfactant may be any of anionic, nonionic, and cationic surfactants.

The coating material to form the resin layer 3 is a mixed coating solution of a resin composition and a solvent. The resin layer 3 is formed by applying the coating solution to a release sheet, and then evaporating the solvent by drying. The solvent may be water or an aqueous medium. Alternatively, the solvent may be an organic solvent such as xylene or a mineral spirit. In the examples described later, an aqueous medium is used, and the resin layer 3 is produced using an acrylic rubber composition. The layers may be formed in any order on a release sheet. For example, they may be formed in the order of the resin layer 3 and the polymer cement cured layer 2 as described above, or in the order of the polymer cement cured layer 2 and the resin layer 3. Preferably, the resin layer 3 is formed on a release sheet, and then the polymer cement cured layer 2 is formed, as shown in the examples described later.

The thickness of the resin layer 3 is not limited and may be optionally determined according to the usage form (civil engineering structures, including road bridges, tunnels, sluice gates and other river management facilities, sewer pipes, and harbor quays), age, shape, etc. of the structure 21. For example, the thickness may be selected from the range of 50 to 150 um, and the thickness variation is preferably not more than ±50 um. The thickness accuracy would never be achieved by application at a construction site but is achievable in a production line in a factory.

The resin layer 3 has high waterproofness, resistance to salt permeation, and inhibition of neutralization and preferably transmits water vapor. The water vapor transmission rate of the resin layer 3 is desirably adjusted so that the structure protection sheet 1 of the present invention has a water vapor transmission rate of 10 to 50 g/m2·day, for example. The resin layer 3 having such a water vapor transmission rate can impart high waterproofness, resistance to salt permeation, inhibition of neutralization, and a prescribed water vapor transmittance to the structure protection sheet 1. Moreover, the resin layer 3 including the same resin component as one in the polymer cement cured layer 2 is highly compatible with the polymer cement cured layer 2 and has excellent adhesion. The water vapor transmittance is measured in accordance with "Testing Methods for Determination of the Water Vapor Transmission Rate of Moisture Proof Packaging Materials" stipulated in JIS Z0208.

The resin layer 3 may contain a pigment in order to enrich the color variation of the structure protection sheet 1 of the present invention.

The resin layer 3 may contain an inorganic substance. The resin layer 3 containing an inorganic substance can have scratch resistance. Any inorganic substance may be used, and examples thereof include conventionally known materials such as metal oxide particles of silica, alumina, titania, and the like.

The resin layer 3 may further contain a known antifouling agent. The structure protection sheet of the present invention is used for repairing concrete structures that are usually installed outdoors, and therefore the resin layer 3 is often contaminated. The resin layer containing an antifouling agent can suitably prevent contamination of the structure protection sheet of the present invention.

The resin layer 3 may contain additives capable of imparting various functions. Examples of such additives include cellulose nanofibers and the like.

### (Pattern)

In the structure protection sheet of the present invention, the pattern 4 for detecting deformation is preferably formed on the surface on the side to be further from the structure 21 of the resin layer 3.

The pattern 4 is not limited as long as it is a pattern with which deformation that follows the deformation of the surface of the structure 21 can be detected in a state where the sheet is attached to the structure 21. Still, the pattern is preferably a geometric pattern.

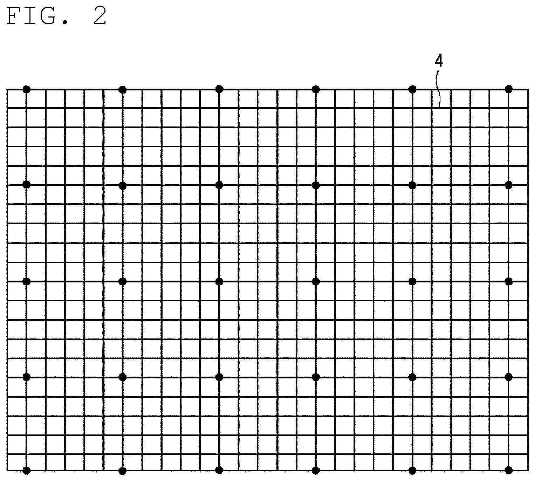

The geometric pattern is not limited, and may be, for example, an arbitrary pattern such as a grid pattern, a striped pattern, a checkered pattern, and a meandering pattern. Particularly preferred is a geometric pattern composed of straight lines and dots as illustrated in FIG. 2. Since the dots can be used as points to be checked for detecting deformation, it becomes easier to detect deformation based on the image data obtained using the digital photography means described above.

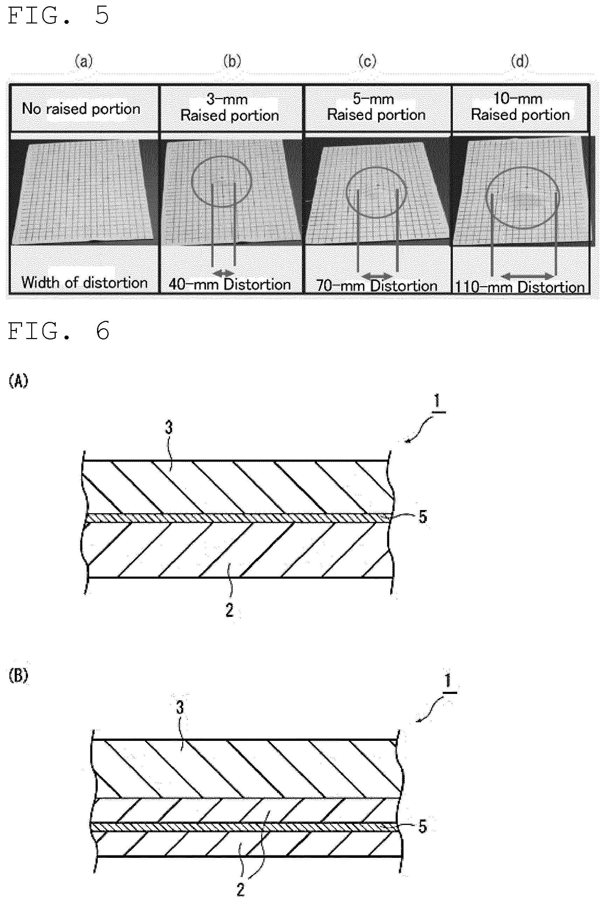

For example, FIGS. 5(a) to 5(d) show photographs showing states where the 10-mm grid patterns 4 are raised in different heights. FIG. 5(a) shows a state with no raised portion; FIG. 5(b) shows a case where the height of the raised portion is 3 mm; FIG. 5(c) shows a case where the height of the raised portion is 5 mm; and FIG. 5(d) shows a case where the height of the raised portion is 10 mm.

As indicated by circles in FIGS. 5(b) to 5(d), 40-mm-wide distortion was observed in the grid pattern in FIG. 5(b) showing a state with a 3-mm raised portion; 70-mm-wide distortion was observed in the grid pattern of FIG. 5(c) showing a state with a 5-mm raised portion; and 110-mm-wide distortion was observed in the grid pattern of FIG. 5(d) showing a state with a 10-mm raised portion. The magnitudes of the distortions observed in FIGS. 5(b) to 5(d) were calculated using the dimension measuring means and calculation means described above.

Such a pattern 4 can be formed, for example, using a known coating material such as a UV curable coating material or a retroreflective coating material. Preferably, the pattern 4 is formed using a retroreflective coating material. When the pattern 4 is formed using a retroreflective coating material, the pattern 4 for detecting deformation is not normally observed on the surface of the resin layer 3 and the pattern 4 for detecting deformation can be observed only upon inspection of the structure 21. Therefore, when a vehicle such as an automobile, or the like passes by the structure 21, the pattern 4 for detecting deformation does not bother the driver by coming into his/her sight and is less likely to induce an accident or the like.

In the structure protection sheet 1 of the present invention, the pattern 4 for detecting deformation may be, for example, a picture or a pattern suitable for the environment where the structure 21 is installed. Providing a mark as a point to be checked in the inspection in such a picture or pattern allows suitable detection of the deformation. Such a structure protection sheet has an expression corresponding to the environment where the structure 21 is installed. Therefore, the use of a retroreflective coating material is not needed and the structure 21 becomes excellent in design properties.

The pattern 4 on the surface of the resin layer 3 may be formed by any method. For example, the pattern 4 may be formed using a coating material obtainable by blending a solvent, a binder resin (urethane resin, acrylic resin, nitrocellulose resin, rubber resin, etc.), various pigments, extender pigments, and additives (plasticizers, desiccants, stabilizers, etc.).

Examples of the method for forming the pattern 4 formed using the coating material include known printing methods such as offset printing, gravure printing, flexographic printing, silk screen printing, and inkjet printing and known methods capable of forming an arbitrary pattern, such as the use of a plotter, handwriting, pattern transfer, and a transcription method.

In order to improve adhesion to the resin layer 3, the surface of the resin layer 3 may be subjected to treatment such as corona treatment or ozone treatment before formation of the pattern 4 formed using the coating material.

The produced structure protection sheet 1 may have a release sheet on the pattern 4. For example, the release sheet can protect the pattern 4 on the surface of the structure protection sheet 1 at a construction site. At the construction site, the structure protection sheet 1 is attached to a target structure 21 together with the release sheet (optionally via an undercoat layer 22 or an adhesive layer 23), and then the release sheet is peeled off. Thus, the workability at the construction site is greatly improved. The release sheet is preferably a processing paper used in the production process of the structure protection sheet 1.

The material or the like of the processing paper used as the release sheet may be any known material used in production processes. Examples include lamination paper including a layer of olefin resin such as polypropylene or polyethylene or a silicon-containing layer, like known processing papers. The thickness of the processing paper is not limited. For example, the thickness may be within the range of about 50 to about 500 um, provided that the thickness does not hinder the production, construction, and handling.

The structure protection sheet 1 described above can protect the structure 21 such as concrete for a long period of time. Specifically, the structure protection sheet 1 is provided with functions appropriate for the properties of the structure 21, thereby achieving conformity to cracks or swelling of the structure 21, prevention of entry of water or degradation factors such as chloride ions into the structure 21, and transmittance allowing for emission of moisture or degradation factors from the structure. The structure protection sheet 1 can be produced in a factory, enabling mass production of high-quality products with stable properties. Thus, construction can be carried out even without craftsman's skill, and thus reduction of a construction period and labor cost cut can be achieved. Since the pattern 4 for detecting deformation is formed on the surface of the resin layer 3, the deformation that follows the deformation of the structure 21 can be easily detected on the surface of the pattern 4 of the structure protection sheet 1 attached to the structure 21.

### (Polymer cement cured layer)

As illustrated in FIG. 3(C), the polymer cement cured layer 2 is a layer positioned on a side to be closer to a structure. For example, the polymer cement cured layer 2 may be a single layer formed without repeating coating as illustrated in FIG. 1(A) or a stack of layers formed by repeating coating as illustrated in FIG. 1(B). Whether the layer should be a single layer or a stack of layers may be optionally determined in consideration of the thickness of the entire sheet, functions to impart (conformity, attachability to a structure, etc.), production line in a factory, production cost, etc. For example, when the production line is too short to form a single layer having a prescribed thickness, the layer may be formed by repeating coating twice or more. For example, in the repeat coating for two layers, the second layer is formed after the first layer is dried.

The polymer cement cured layer 2 may have a structure in which layers having different characteristics are stacked. For example, formation of a layer having a higher proportion of a resin component on a side to be closer to the resin layer 3 enables the layer having a high resin component content to adhere to the resin layer and a layer having a high cement component content to adhere to a concrete structure, so that the attachability to both becomes extremely excellent.

The polymer cement cured layer 2 is obtained by applying a coating material that is prepared by processing a cement component-containing resin (resin component) into a coating material.

Examples of the cement component include various types of cement, limestones containing calcium oxide components, and clays containing silicon dioxide. Cement is preferred among these. Examples of the cement include Portland cement, alumina cement, high-early-strength cement, and fly ash cement. The cement is selected according to the properties that the polymer cement cured layer 2 should have. For example, the cement is selected in consideration of the degree of conformity to the concrete structure 21. In particular, Portland cement stipulated in JIS R5210 is preferred.

Examples of the resin component include acrylic resins, acrylic urethane resins, acrylic silicone resins, fluororesins, flexible epoxy resins, polybutadiene rubbers, and acrylic resins exhibiting characteristics of rubber (for example, synthetic rubber containing an acrylic acid ester as a main component). One resin component may be used alone or multiple resin components may be used in combination. The resin component is preferably the same as the resin component constituting the resin layer 3 described above to increase the adhesion between the polymer cement cured layer 2 and the resin layer 3.

The amount of the resin component is appropriately adjusted according to the materials used and the like. The amount is preferably 10% by weight to 40% by weight relative to the total amount of the cement component and the resin component. When the amount is less than 10% by weight, the attachability to the resin layer tends to be lowered or maintenance of the polymer cement cured layer in the form of a layer tends to be difficult. When the amount is more than 40% by weight, the attachability to the concrete structure 21 may be insufficient. From the above standpoint, the amount of the resin component is more preferably 10% by weight to 40% by weight, still more preferably 20% by weight to 30% by weight.

The coating material to form the polymer cement cured layer 2 is a coating solution prepared by mixing the cement component and the resin component using a solvent. The resin component is preferably an emulsion. For example, an acrylic emulsion is a polymer fine powder prepared by emulsion polymerization of an acrylate monomer or the like using an emulsifier. Preferred examples include an acrylic acid polymer emulsion that is obtainable by polymerizing a monomer or a monomer mixture, containing one or more selected from acrylates and methacrylates, in water containing a surfactant.

The amount of the acrylate or the like in the acrylic emulsion is selected from a range of 20 to 100% by mass, though not limited thereto. The amount of the surfactant is not limited and may be determined as necessary. Still, the surfactant is added in an amount at which an emulsion can be formed.

The polymer cement cured layer 2 is formed by applying the coating solution to a release sheet and then evaporating the solvent (preferably water) by drying. For example, the polymer cement cured layer 2 is formed using a mixed composition of a cement component and an acrylic emulsion as a coating solution. The resin layer 3 may be formed after the polymer cement cured layer 2 is formed on the release sheet. Alternatively, the polymer cement cured layer 2 may be formed after the resin layer 3 is formed on the release sheet. In the present invention, the structure protection sheet 1 may be produced by, for example, embossing or matting (imparting a pattern of protrusions and depressions to) a release sheet, and forming the resin layer 3 (which may be a single layer or a stack of two or more layers) and the polymer cement cured layer 2 (which may be a single layer or a stack of two or more layers) on the release sheet in the stated order to impart a design property to the resin layer 3.

The polymer cement cured layer 2 may have any thickness, and the thickness may be set as appropriate according to the usage form (civil engineering structures, including road bridges, tunnels, sluice gates and other river management facilities, sewer pipes, and harbor quays), age, shape, etc. of the structure 21. For example, the thickness of the polymer cement cured layer may be specifically in the range of 0.5 mm to 1.5 mm. In an exemplary embodiment, the polymer cement cured layer 2 having a thickness of 1 mm preferably has a thickness variation of not more than ± 100 um. The thickness accuracy would never be achieved by coating at a construction site and is achievable only by stable coating in a production line in a factory. Even when the thickness is more than 1 mm, the thickness variation can be set not more than ± 100 um. When the thickness is less than 1 mm, the thickness variation can be further reduced.

The polymer cement cured layer 2, owing to the presence of the cement component, can better transmit water vapor than the resin layer 3 described later. The water vapor transmission rate of the polymer cement cured layer 2 is preferably, for example, about 20 to 60 g/m² ·day. The cement component is highly compatible with a cement component constituting concrete, for example, and therefore provides excellent adhesion to a concrete surface. When an undercoat layer 22 and an adhesive 23 are stacked on the surface of the structure 21 in the order illustrated in FIG. 3, the polymer cement cured layer 2 containing a cement component closely adheres to the adhesive 23. The polymer cement layer 2 is stretchable. Thus, even if cracks or swelling occurs in the structure 21, the polymer cement cured layer 2 can conform to the changes in the concrete.

### (Adhesive layer)

The structure protection sheet of the present invention may include an adhesive layer on the side further from the resin layer 3 (the side to be closer to the structure 21) of the polymer cement cured layer 2.

Even when there are fine depressions or the like on the surface of the structure 21, the adhesive layer, when provided, can fill the depressions to improve the adhesion of the structure protection sheet of the present invention.

The amount of the adhesive layer to be laminated is preferably 20 g/m² or more and 250 g/m² or less in order to achieve sufficient adhesion force to the surface of a structure such as concrete, and the adhesion force is preferably 10 N/25 mm or more and 60 N/25 mm or less.

The adhesive contained in such an adhesive layer is not limited, and a known adhesive can be used. For example, an acrylic adhesive is suitably used.

Examples of commercially available products of the adhesive include "SP-1090NT" available from DIC Corporation.

When the adhesive layer is provided, a release film is preferably attached to the surface on the side further from the polymer cement cured layer 2 of the adhesive layer to protect the surface of the adhesive layer. The release film is not limited, and may be, for example, a film including a substrate layer and a release layer.

Examples of the material of the substrate layer include polyesters such as polyethylene terephthalate and polyethylene naphthalate; polyolefins such as polyethylene, polypropylene, and polymethylpentene; polyamides such as nylon 6; vinyl resins such as polyvinyl chloride; acrylic resins such as polymethyl methacrylate; cellulose resins such as cellulose acetate; and synthetic resins such as polycarbonate. The substrate layer may contain paper as a main component. Moreover, the substrate layer may be a laminate including two or more layers.

Examples of the material of the release layer include silicone resins, melamine resins, and fluorinated polymers. The release layer can be formed by a coating method including applying a coating solution containing the material of the release layer and an organic solvent by a known method such as a gravure coating method, a roll coating method, a comma coating method, or a lip coating method, and drying and curing the coating solution. In formation of the release layer, the surface of the substrate layer on which the release layer is to be laminated may be subjected to corona treatment or easy adhesion treatment.

### (Mesh layer)

The structure protection sheet of the present invention preferably further includes a mesh layer.

When the structure protection sheet of the present invention is used to repair a large-sized concrete member, such as civil engineering structures including road bridges, tunnels, sluice gates and other river management facilities, sewer pipes, and harbor quays, the structure protection sheet of the present invention itself is required to have sufficient strength (tensile strength, bending strength, hardness, surface strength, punching strength, toughness, etc.; the same shall apply hereinbelow). Including the mesh layer, the structure protection sheet of the present invention can have sufficient strength capable of repairing a large-sized concrete member described above.

As illustrated in FIG. 6(A), the structure protection sheet 1 of the present invention includes a mesh layer 5 at the interface between the polymer cement cured layer 2 and the resin layer 3 in order to achieve excellent bonding strength.

The bonding strength is determined as follows. The face on the side closer to the polymer cement cured layer 2 of the structure protection sheet 1 of the present invention is bonded to a concrete surface using an adhesive, and a tensile jig is fixed to the surface of the resin layer 3. The tensile jig is pulled to the opposite direction from the concrete at a speed of 1500 n/min to measure the strength at which tensile delamination occurs.

As illustrated in FIG. 6(B), the mesh layer 5 may be present inside the polymer cement cured layer 2. The mesh layer 5 may be disposed on the side opposite to the side in contact with the resin layer 3 of the polymer cement cured layer 2. Preferably, the mesh layer 5 is embedded in the polymer cement cured layer 2. When the mesh layer 5 is embedded inside the polymer cement cured layer 2, the contact area between the mesh layer 5 and the polymer cement cured layer 2 increases to easily improve the adhesion strength between them. As a result, the strength of the polymer cement cured layer 2 as a whole is easily secured. When the mesh layer 5 is not embedded inside the polymer cement cured layer 2, separation is likely to occur at the interface between the mesh layer 5 and the polymer cement cured layer 2.

When the mesh layer 5 is present inside the polymer cement cured layer 2, the mesh layer 5 is present at a position of half the thickness of the polymer cement cured layer 2. Preferably, the mesh layer 5 is present closer to the resin layer 3 side. When the mesh layer 5 is present closer to the resin layer 3 side in the polymer cement cured layer 2, the adhesion strength is improved by 1.3 times on average.

In the present invention, the mesh layer 5 is preferably impregnated with a material (for example, a cement component or a resin component) constituting the polymer cement cured layer 2.

The state where the mesh layer 5 is impregnated with the material constituting the polymer cement cured layer 2 means a state where the material constituting the polymer cement cured layer 2 fills the space between the fibers constituting the mesh layer 5, and such an impregnated state makes it easy to obtain extremely excellent adhesion strength between the mesh layer 5 and the polymer cement cured layer 2. Moreover, the interaction between the mesh layer 5 and the material of the polymer cement cured layer 2 tends to be stronger, and the strength of the structure protection sheet 1 tends to be better.

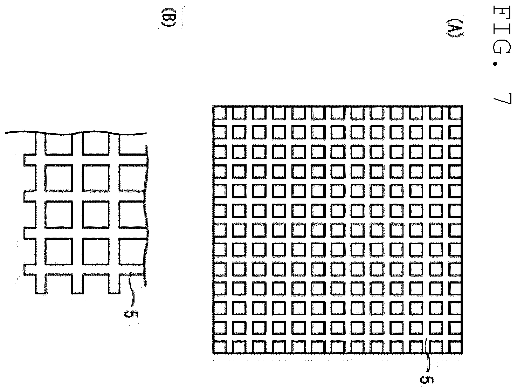

As illustrated in FIG. 7, the mesh layer 5 has a structure in which warp and weft fibers are arranged in a lattice form, for example.

The fibers are preferably composed of at least one type of fiber selected from the group consisting of polypropylene fibers, vinylon fibers, carbon fibers, aramid fibers, glass fibers, polyester fibers, polyethylene fibers, nylon fibers, and acrylic fibers. Among these, polypropylene fibers and vinylon fibers are suitably usable.

The shape of the mesh layer 5 is not limited, and any mesh layer 5 such as a triaxial fabric can be used as well as the biaxial fabric illustrated in FIG. 7.

The mesh layer preferably has a line pitch of 50 mm to 1.2 mm (linear density of 0.2 to 8.0 lines/cm). When the pitch is 1.2 mm or less, the bonding between the polymer cement layers on the upper and lower sides of the mesh becomes insufficient, and the surface strength of the structure protection sheet may become insufficient. In contrast, when the line pitch exceeds 50 mm, there is no adverse effect on the surface strength of the structure protection sheet, but the tensile strength may be lowered.

In the structure protection sheet of the present invention, there is a trade-off relation between the tensile strength and the surface strength, and the mesh layer suitable for the present invention has a line pitch in a range of 50 mm to 1.2 mm.

The mesh layer 5 may have a size that covers the entire surface of the polymer cement cured layer 2 or may be smaller than the polymer cement cured layer 2, when viewed from above the polymer cement cured layer 2.

Namely, the area in a plan view of the mesh layer 5 may be the same as or smaller than the area in a plan view of the polymer cement cured layer 2. Preferably, the area in a plan view of the mesh layer 5 is 60% or more and 95% or less of the area in a plan view of the polymer cement cured layer 2. When it is less than 60%, the strength of the structure protection sheet of the present invention may be insufficient, or the strength may vary. When it exceeds 95%, in the structure in which the polymer cement cured layers 3 are stacked via the mesh layer 5, the adhesion strength between the polymer cement cured layers 3 may be poor. In such a case, when the structure protection sheet of the present invention is attached to a structure, a risk of separation in the polymer cement cured layer 2 portion increases. The area in a plan view of the mesh layer 5 and the like can be measured by a known method.

### [Method for producing structure using structure protection sheet]

A method for producing a structure using the structure protection sheet of the present invention is a construction method using the structure protection sheet 1 of the present invention, including applying the adhesive 23 to the structure 21 and then attaching the structure protection sheet 1, as illustrated in FIG. 3. The construction method enables easy attachment of the structure protection sheet 1 to the surface of the structure 21, allowing even an unskilled worker to place the structure protection sheet 1 composed of layers having a small variation in thickness on the structure 21. The method can not only dramatically reduce a construction period but also protect the structure 21 for a long period of time, and further enables easy detection of the deformation of the structure 21.

When the structure protection sheet of the present invention includes the adhesive layer described above, the method may be a method including removing the release film described above and attaching the adhesive layer to the surface of the structure 21.

FIG. 3 illustrates explanatory views showing a construction method of attaching the structure protection sheet 1. As illustrated in FIG. 3(A), the undercoat layer 22 is preferably formed on the surface of the structure 21.

The undercoat layer 22 may be formed by mixing a resin such as an epoxy resin with a solvent to prepare a coating solution, applying the coating solution to the structure 21, and then evaporating the solvent in the coating solution by drying.

Examples of the solvent include water and the like as described above. The thickness of the undercoat layer 22 is not limited and may be, for example, in a range of 100 to 150 um.

The adhesion between the structure 21 and the adhesive 23 is increased by the undercoat layer 22 placed between them. Thus, the structure protection sheet 1 can stably protect the structure 21 for a long period of time.

If the structure 21 has cracks or defective parts, the undercoat layer 22 is preferably placed after the cracks or defective parts are repaired.

Any material may be used in the repair. Usually, cement mortar, an epoxy resin, or the like is used.

After the formation of the undercoat layer 22, the adhesive 23 is applied as illustrated in FIG. 3(B). As illustrated in FIG. 3(C), the structure protection sheet 1 is attached to the applied adhesive 23 that is not dried. Examples of the adhesive 23 include urethane adhesives, epoxy adhesives, and adhesives containing acrylic resins having characteristics of rubber (for example, synthetic rubber containing an acrylic acid ester as a main component). The adhesive 23 more preferably contains the same resin component as that constituting the polymer cement cured layer 2 in the structure protection sheet 1 so as to increase the adhesive strength to the polymer cement cured layer 2. The thickness of the adhesive 23 is not limited. The adhesive 23 is usually applied to concrete by brush coating, spraying, or the like and is then cured by natural drying with time.

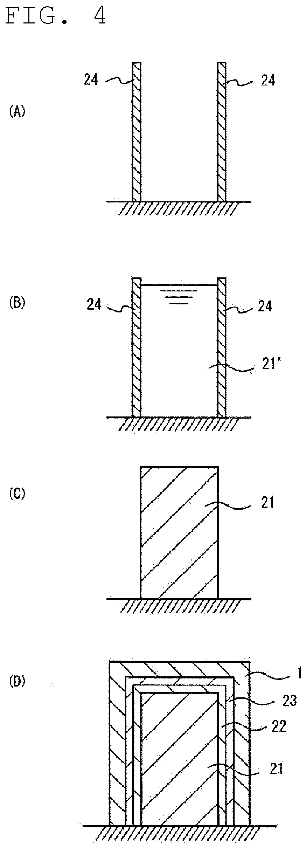

FIG. 4 illustrates explanatory views showing an example in which the structure protection sheet 1 is used in the cast-in-place method. The cast-in-place method refers to a construction method including: forming a formwork 24 at a construction site; pouring a concrete composition 21' into the formwork 24; and leaving it until it is cured, thereby producing the concrete structure 21. In the cast-in-place method, the structure protection sheet 1 attached to a surface of the cured concrete structure 21 makes the structure 21 to be less susceptible to degradation. The attachment is carried out by coating a surface of the concrete structure 21 with the undercoat layer 22, followed by drying; applying the adhesive 2 to the undercoat layer 22, and attaching the structure protection sheet 1. Next, the adhesive 23 is cured by natural drying, so that the structure protection sheet adheres to the concrete structure 21.

If the structure 21 already has cracks or the like, the structure protection sheet 1 is attached by the construction method described above after the defective parts are repaired. Thus, the concrete structure 21 can obtain a longer life.

### [System for inspecting surface deformation of structure]

The system for inspecting surface deformation of a structure of the present invention includes: an individual identification means for identifying a structure protection sheet attached to a surface of a structure; a digital photography means for digitally photographing a surface of a resin layer on an outermost surface of the structure protection sheet; a dimension measuring means for measuring a dimension of the surface of the resin layer based on image data obtained in the digital photography, and a calculation means for calculating an amount of deformation of the surface of the resin layer based on data of the measured dimension.

Examples of the individual identification means, the digital photography means, the dimension measuring means, and the calculation means include those described in the method for inspecting surface deformation of a structure of the present invention.

Further, in the apparatus for inspecting surface deformation of a structure of the present invention, the digital photography means is preferably fixed to a moving object or a rod-shaped fixture. The inspection of the surface of a structure can be conducted safely, quickly, and accurately even in locations where conventional inspections have been challenging, such as the surface of a higher part of a large structure, a structure in a remote place, a structure above or under water, and a structure in a hazardous area.

The system for inspecting surface deformation of a structure of the present invention can be suitably used in the method for inspecting surface deformation of a structure of the present invention described above.

According to the system for inspecting surface deformation of a structure of the present invention, since deformation of the structure protection sheet that occurs following the deformation of the surface of the structure is easily detected, even a large structure can be quickly and easily inspected and even an unskilled worker can inspect the state of the structure accurately.

### EXAMPLES

The present invention will be described more specifically with reference to examples and comparative examples.

### [Example 1]

A release sheet including a PP lamination paper and having a thickness of 130 um was used. A polymer cement cured layer-forming composition was applied to the release sheet and dried, whereby a single polymer cement cured layer 2 having a thickness of 1.29 mm was formed. Then, a resin layer-forming composition containing an acrylic resin was applied to the polymer cement cured layer 2 and dried, whereby a single resin layer 3 having a thickness of 100 um was formed.

Grid-pattern lines having a line width of 0.5 mm and a line interval of 10 mm were printed on the surface of the resin layer 3 by screen printing (polyester mesh, mesh count 355, thread diameter 30 µm, emulsion thickness 15 um) using a UV curable black ink (JELCON NOS black (A) (XMH-180424) available from Jujo Chemical Co., Ltd.) and a squeegee with a hardness of 85 degrees, followed by curing of the printed lines using a UV lamp (60 mW) for one minute. Thus, a pattern for detecting deformation was formed. The total thickness of the resulting structure protection sheet was 1.30 mm.

This structure protection sheet 1 was continuously produced in a factory at a controlled temperature of about 25°C and wound up together with the release sheet into a roll.

The polymer cement cured layer-forming composition is a water-based acrylic emulsion containing 45 parts by mass of a cement mixture. The cement mixture at least contains 70 ± 5 parts by mass of Portland cement, 10 ± 5 parts by mass of silicon dioxide, 2 ± 1 parts by mass of aluminum oxide, and 1 to 2 parts by mass of titanium oxide. The acrylic emulsion at least contains 53 ± 2 parts by mass of an acrylic acid polymer obtained by emulsion polymerization of an acrylate monomer using an emulsifier, and 43 ± 2 parts by mass of water. The polymer cement cured layer 2 obtained by applying and drying the polymer cement cured layer-forming composition that is prepared by mixing these materials is a composite layer in which the acrylic resin has a Portland cement content of 50% by mass. The resin layer-forming composition is an acrylic silicone resin. This acrylic silicone resin is an emulsion composition containing 60 parts by mass of acrylic silicone resin, 25 parts by mass of titanium dioxide, 10 parts by mass of ferric oxide, and 5 parts by mass of carbon black.

### [Example 2]

Example 2 was carried out as in Example 1, except that grid-pattern lines having a line width of 1.0 mm and a line interval of 5 mm were printed on the surface of the resin layer 3 by screen printing (polyester mesh, mesh count 355, thread diameter 30 µm, emulsion thickness 15 um) using a thermosetting black ink (prepared by blending 10 parts of 9000-1 series PET ink, KW-S-P (available from Jujo Chemical Co., Ltd.) to 1 part of a curing agent for FM ink) and a squeegee with a hardness of 90 degrees, followed by drying and curing of the printed lines at 70°C for 15 minutes, whereby the pattern 4 was formed.

### [Example 3]

Example 3 was carried out as in Example 1, except that grid-pattern lines having a line width of 0.5 mm and a line interval of 10 mm were printed on the surface of the resin layer 3 using an inkjet printer and CN334 Black for inkjet printing available from Kishu Giken Kogyo Co., Ltd., followed by natural drying of the printed lines, whereby the pattern 4 was formed.

### [Example 4]

Example 4 was carried out as in Example 1, except that grid-pattern lines having a line width of 0.5 mm and a line interval of 10 mm were printed on the surface of the resin layer 3 by screen printing (polyester mesh, mesh count 355, thread diameter 30 µm, emulsion thickness 15 um) using a retroreflective white ink (COLOSER-reflective ink, white available from Jujo Chemical Kogyo Co., Ltd.) and a squeegee having a hardness of 85 degrees, followed by drying and curing of the printed lines at 120°C for 15 minutes, whereby the pattern 4 is formed.

### [Example 5]

Example 5 was carried out as in Example 1, except that grid-pattern lines having a line width of 1.0 mm and a line interval of 5 mm were printed on the surface of the resin layer 3 by screen printing (polyester mesh, mesh count 355, thread diameter 30 µm, emulsion thickness 15 um) using NINJA INK (prepared by blending 10 parts of oil-based POH/POH-E type and 1 part of a crosslinking agent for that ink) available from KomatsuProcess Co., Ltd. and a squeegee having a hardness of 90 degrees, followed by drying and heating of the printed lines at 70°C for 15 minutes, whereby the pattern 4 is formed.

### [Example 6]

Example 6 was carried out as in Example 1, except that an adhesive with a thickness of 200 um formed by applying an adhesive (SP-1090NT available from DIC Corporation) using a comma coater on a release film (SP3000 (silicone type) available from Toyo Cloth Co., Ltd.) and the polymer cement cured layer 2 of the structure protection sheet produced in Example 1 were brought into contact with each other and pressed to provide a structure protection sheet having a structure including an adhesive layer and a release film.

### [Comparative Example 1]

A structure protection sheet was produced as in Example 1, except that the pattern 4 was not printed on the surface of the resin layer 3.

### [Observation of raised portion]

The structure protection sheets produced in Examples 1 to 6 and Comparative Example 1 were each cut to a size of 400 mm × 400 mm to provide a test piece. To the test sample was printed a 2D barcode with a 16-digit number as individual identification information. A smartphone was used to identify the individual identification information.

Next, the pattern 4 of the test piece placed on a stand via hard cardboard was horizontally photographed with an iPhone (registered trademark) XS, whereby image data before deformation was obtained.

Then, the stand was pressed from the back side with a stamping die to simulate a state where the base concrete is raised on the pattern 4 of the test piece. The pattern 4 in that state was photographed horizontally with an iPhone (registered trademark) XS, whereby image data after deformation was obtained.

An image was synthesized from the image data before and after the deformation using image processing software of a personal computer, the deformed portion was traced with a touch and pen input, and the amount of deformation of the pattern 4 was calculated using image analysis software.

The structure protection sheets of Examples 4 and 5 were digitally photographed with irradiation of the pattern 4 using an LED light RX-086PS available from Gentos Co., Ltd.

The structure protection sheet of Example 6 was attached to the stand via an adhesive layer after peeling off the release film.

As a result, all the structure protection sheets of the examples enabled calculation of the amount of deformation of the pattern at the raised portion, which allowed clear detection of the deformation. In contrast, it was difficult to distinguish the raised portion from the other portions in the case of the structure protection sheet of Comparative Example 1.

### REFERENCE SIGNS LIST

1 structure protection sheet
2 polymer cement cured layer
3 resin layer
4 pattern
5 mesh layer
21 structure (concrete)
21' concrete composition (structure-forming composition)
22 undercoat layer
23 adhesive
24 formwork
30 moving object
31 photography means

## Claims

1. A method for inspecting surface deformation of a structure, the method comprising:
identifying a structure protection sheet attached to a surface of a structure using an individual identification means;
digitally photographing a surface of a resin layer on an outermost surface of the structure protection sheet using a digital photography means;
measuring a dimension of the surface of the resin layer based on image data obtained in the digital photography using a dimension measuring means; and
calculating a deformation amount of the surface of the resin layer based on data of the measured dimension using a calculation means.

2. The method for inspecting surface deformation of a structure according to claim 1,
wherein the digital photography means digitally photographs the surface of the resin layer using an optical means.

3. The method for inspecting surface deformation of a structure according to claim 2,
wherein the optical means uses light in at least one region selected from the group consisting of a visible light region, an infrared light region, and an ultraviolet light region.

4. The method for inspecting surface deformation of a structure according to claim 1, 2, or 3,
wherein a pattern for detecting deformation is formed on the surface of the resin layer, and the pattern for detecting deformation is photographed using the digital photography means.

5. The method for inspecting surface deformation of a structure according to claim 4,
wherein the pattern for detecting deformation is a geometric pattern.

6. The method for inspecting surface deformation of a structure according to claim 5,
wherein the geometric pattern is composed of a straight line and a dot.

7. The method for inspecting surface deformation of a structure according to claim 4, 5, or 6,
wherein the pattern for detecting deformation is formed using a retroreflective coating material.

8. The method for inspecting surface deformation of a structure according to claim 1, 2, 3, 4, 5, 6, or 7,
wherein the digital photography means is fixed to a moving object or a rod-shaped fixture.

9. The method for inspecting surface deformation of a structure according to claim 8,
wherein the moving object is a small unmanned aircraft, an unmanned aircraft, an aircraft, an artificial satellite, an unmanned ship, a ship, an underwater moving object, an unmanned automobile, or an automobile.

10. A system for inspecting surface deformation of a structure, comprising:
an individual identification means for identifying a structure protection sheet attached to a surface of a structure;
a digital photography means for digitally photographing a surface of a resin layer on an outermost surface of the structure protection sheet;
a dimension measuring means for measuring a dimension of the surface of the resin layer based on image data obtained in the digital photography; and
a calculation means for calculating an amount of deformation of the surface of the resin layer based on data of the measured dimension.

11. A structure protection sheet which is to be attached to a surface of a structure,
wherein the structure protection sheet comprises a resin layer on an outermost surface in a state of being attached to the structure, and
a pattern for detecting deformation is formed on a surface of the resin layer.

12. The structure protection sheet according to claim 11,
wherein the structure protection sheet comprises a polymer cement cured layer on a side to be closer to the structure, and the resin layer is provided on the polymer cement cured layer.

13. The structure protection sheet according to claim 12,
wherein the polymer cement cured layer is a layer containing a cement component and a resin, and the resin is contained in an amount of 10% by weight or more and 40% by weight or less.

14. The structure protection sheet according to claim 11, 12, or 13, further comprising a mesh layer.

15. The structure protection sheet according to claim 11, 12, 13, or 14,
wherein the pattern for detecting deformation is a geometric pattern.

16. The structure protection sheet according to claim 15,
wherein the geometric pattern is composed of a straight line and a dot.

17. The structure protection sheet according to claim 11, 12, 13, 14, 15, or 16,
wherein the pattern for detecting deformation is formed using a retroreflective coating material.
